# EUROPEAN PATENT APPLICATION

(11) **EP 2 659 948 A1**
(43) Date of publication of application: **06.11.2013**
(21) Application number: 11844393.6
(22) Date of filing: 27.07.2011
(51) Int. Cl.: B01D 53/62, B01D 53/14, C01B 31/20

(54) **C02 RECOVERY SYSTEM**

(30) Priority: 01.12.2010 JP 2010268864
(71) Applicant: Mitsubishi Heavy Industries, Ltd., Tokyo 108-8215 (JP); The Kansai Electric Power Co., Inc., Kita-ku Osaka-shi Osaka 530-8270 (JP)
(72) Inventor: IIJIMA, Masaki, TOKYO 108-8215 (JP); YAGI, Yasuyuki, AMAGASAKI, HYOGO 661-0974 (JP); KAIBARA, Kazuhiko, AMAGASAKI, HYOGO 661-0974 (JP)
(74) Representative: Intès, Didier Gérard André
(86) International application number: PCT/JP2011/067157
(87) International publication number: WO 2012/073552

(57) **Abstract**

A CO2 recovery system according to the present invention includes: a CO₂ absorber (16) that brings a cooled CO₂-containing exhaust gas (12) into contact with a CO₂-absorbent (15) that absorbs CO₂, thereby removing the CO₂ from the exhaust gas (12); an absorbent regenerator (18) that releases CO₂ from a CO₂-absorbent that has absorbed CO₂ (rich solution) (17), thereby regenerating the absorbent (15); and a lean solution temperature-reduction unit (50) that recovers heat from a lean solution (15) discharged from the absorbent regenerator (18).

## Description

### FIELD

The present invention relates to a CO₂ recovery system that uses an absorbent removing CO₂ contained in an exhaust gas.

### BACKGROUND

In recent years, a greenhouse effect caused by CO₂ has been pointed out as one of causes of global warming. Accordingly, measures against the greenhouse effect have been urgently and internationally needed for the protection of the global environment. Since a source of CO₂ corresponds to the whole field of human activity using the combustion of fossil fuel, a demand for the suppression of CO₂ emission tends to become stronger. Accordingly, as measures against an ingredient (chemical use) such as urea, an increase in production of crude oil, and global warming, a method of removing and recovering CO₂, which is contained in a flue gas, by bringing a flue gas of a boiler into contact with an amine-based CO₂-absorbent and a method of storing recovered CO₂ without releasing recovered CO₂ to the atmosphere have been energetically studied for power generation facilities, such as thermoelectric power plants using a large amount of fossil fuel.

As a practical method of recovering and storing CO₂ contained in a large amount of flue gas, there is a chemical absorption technique that brings a flue gas into contact with a CO₂-absorbent such as an amine aqueous solution. A process for bringing a flue gas into contact with a CO₂-absorbent in a CO₂ absorber, a process for liberating CO₂ and regenerating an absorbent by heating the absorbent having absorbed CO₂ in an absorbent regenerator, and a process for circulating the absorbent in the CO₂ absorber again to reuse the absorbent are employed as processes for removing and recovering CO₂ from a flue gas by using the above-mentioned CO₂-absorbent (Patent Literature 1).

The operation of a CO₂ recovery apparatus using this chemical absorption technique in the related art causes an amine aqueous solution and CO₂ to be separated from each other in the absorbent regenerator by high-temperature steam, but the consumption of this steam (energy) has needed to be minimized. For this purpose, methods using a mixture of two or more kinds of different CO₂-absorbents (Patent Literatures 2 and 3) and a method of improving a process for feeding a CO₂-absorbent (Patent Literature 4) have been examined until now.

### Citation List

### Patent Literature

Patent Literature 1: Japanese Laid-open Patent Publication No. 7-51537
Patent Literature 2: Japanese Laid-open Patent Publication No. 2001-25627
Patent Literature 3: Japanese Laid-open Patent Publication No. 2005-254212
Patent Literature 4: U.S. 6,800,120

### SUMMARY

### Technical Problem

However, since a system, which absorbs, removes, and recovers CO₂ from a CO₂-containing exhaust gas such as a flue gas by using the above-mentioned CO₂-absorbent, is additionally installed on a combustion facility, the operating cost of the system also needs to be reduced as much as possible. In particular, since a large amount of heat energy is consumed in the absorbent regenerator that regenerates an absorbent, it is necessary to use a process for further reducing the energy of steam and saving energy as much as possible.

Further, if the size of the CO₂ recovery system in the related art is increased so that the amount of CO₂ to be recovered per day becomes, for example, 1000 t or more, a large amount of heat energy of a reboiler is consumed in a regeneration process. For this reason, it is necessary to reduce the energy of steam and to save energy.

The invention has been made in consideration of the above-mentioned problem, and an object of the invention is to provide a CO₂ recovery system that further reduces the heat energy of a reboiler and saves energy.

### Solution to Problem

According to a first aspect of the present invention in order to solve the above problems, there is provided a CO₂ recovery system including: a CO₂ absorber that brings a cooled CO₂-containing exhaust gas into contact with a CO₂-absorbent absorbing CO₂ to remove CO₂ from the exhaust gas; an absorbent regenerator that regenerates an absorbent by releasing CO₂ from a CO₂-absorbent having absorbed CO₂; and a lean solution temperature-reduction unit for recovering the heat of a lean solution that is discharged from the absorbent regenerator.

According to a second aspect of the present invention, there is provided the CO₂ recovery system according to the first aspect, wherein the lean solution temperature-reduction unit includes a flash drum that flashes the lean solution, and a flash vapor compressor that supplies flashed vapor into the absorbent regenerator with pressure.

According to a third aspect of the present invention, there is provided the CO₂ recovery system according to the first aspect, wherein the lean solution temperature-reduction unit is formed of a boiler-feedwater heat exchanger that is used to heat boiler feedwater. Advantageous Effects of Invention

According to the invention, it is possible to further reduce the heat energy of a reboiler and to save energy.

### BRIEF DESCRIPTION OF DRAWINGS

FIG. 1 is a schematic view of a CO₂ recovery system according to a first embodiment.
FIG. 2 is a schematic view of a CO₂ recovery system according to a second embodiment.
FIG. 3 is a schematic view of a CO₂ recovery system according to a third embodiment.
FIG. 4 is a schematic view of a CO₂ recovery system in the related art.

### DESCRIPTION OF EMBODIMENTS

The invention will be described in detail below with reference to the drawings. Meanwhile, the invention is not limited by this embodiment. Further, components of the following embodiments include components that can be easily supposed by those skilled in the art or substantially the same components.

### First embodiment

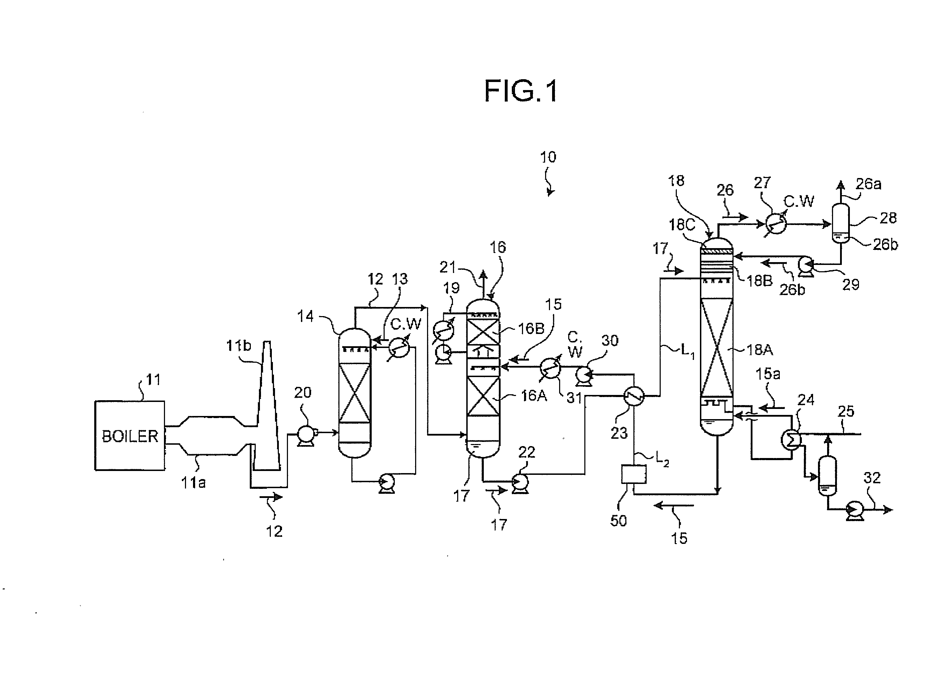

A CO₂ recovery system according to an embodiment of the invention will be described with reference to the drawing. FIG. 1 is a schematic view of a CO₂ recovery system according to a first embodiment.
As illustrated in FIG. 1, a CO₂ recovery system 10 includes an exhaust gas cooling device 14 that uses cooling water 13 to cool a CO₂-containing exhaust gas 12 discharged from industrial equipment such as a boiler 11 or a gas turbine, a CO₂ absorber 16 that brings the cooled CO₂-containing exhaust gas 12 into contact with a CO₂-absorbent 15 absorbing CO₂ to remove CO₂ from the exhaust gas 12, and an absorbent regenerator 18 that regenerates the absorbent 15 by releasing CO₂ from a CO₂-absorbent 17 having absorbed CO₂ (rich solution).
In this system, the regenerated absorbent (lean solution) 15, from which CO₂ has been removed in the absorbent regenerator 18, is reused as the CO₂-absorbent 15.

In a CO₂ recovery method using the CO₂ recovery system 10, first, after the pressure of the CO₂-containing exhaust gas 12 is increased by an exhaust gas blower 20, the CO₂-containing exhaust gas is sent to the exhaust gas cooling device 14, is cooled by the cooling water 13 in the exhaust gas cooling device 14, and is sent to the CO₂ absorber 16.
The CO₂ absorber 16 is provided with filling portions 16A and 16B therein, and the contact efficiency between the exhaust gas 12 and the CO₂-absorbent 15 is improved in the filling portion 16A that is provided at the lower portion of the CO₂ absorber 16. The contact efficiency between the exhaust gas 12 and a cooling water 19 is improved in the filling portion 16B that is provided at the upper portion of the CO₂ absorber 16.

In the CO₂ absorber 16, the exhaust gas 12 comes into contact with, for example, the amine-based CO₂-absorbent 15 and CO₂ contained in the exhaust gas 12 is absorbed in the CO₂-absorbent 15 by a chemical reaction (R-NH₂+H₂O+CO₂→R-NH₃HCO₃). Accordingly, a purified exhaust gas 21 from which CO₂ has been removed is released to the outside of the system. An absorbent 17, which has absorbed CO₂, is also referred to as a "rich solution". The pressure of the rich solution 17 is increased by a rich solution pump 22, and the rich solution 17 is heated by exchanging heat with the absorbent (lean solution) 15, which is regenerated by the removal of CO₂ from the rich solution 17 in the absorbent regenerator 18, at a rich/lean solution heat exchanger 23. Then, the heated rich solution 17 is supplied to the absorbent regenerator 18.

When being introduced into the absorbent regenerator 18 from the upper portion of the absorbent regenerator 18 and flowing downward in the absorbent regenerator 18, the rich solution 17 subjected to heat exchange reacts endothermically with the vapor, releases most of CO₂, and is regenerated. The absorbent from which a part or most of CO₂ has been released in the absorbent regenerator 18 is referred to as a "semi-lean solution". When reaching the lower portion of the absorbent regenerator 18, this semi-lean solution becomes an absorbent from which almost all of CO₂ has been removed. The absorbent, which is regenerated by the removal of almost all of CO₂, is referred to as a "lean solution". This lean solution 15 is indirectly heated by saturated vapor 25 in a regenerating superheater 24.
Further, a CO₂ gas 26, which is released from the rich solution 17 and the semi-lean solution in the absorbent regenerator and contains vapor, is discharged from the top of the absorbent regenerator 18; the vapor is condensed by a condenser 27; water 26b is separated by a separation drum 28; and a CO₂ gas 26a is discharged to the outside of the system. As a result, CO₂ is recovered. The water 26b, which is separated by the separation drum 28, is supplied to the upper portion of the absorbent regenerator 18 by a condensed water circulating pump 29.
The regenerated absorbent (lean solution) 15 is cooled by the rich solution 17 at the rich/lean solution heat exchanger 23. Subsequently, the pressure of the absorbent 15 is increased by a lean solvent pump 30. Then, after being further cooled by a lean solvent cooler 31, the absorbent 15 is supplied to the CO₂ absorber 16 again and is reused as the CO₂-absorbent 15.

Meanwhile, in FIG. 1, a flue 11a of industrial equipment such as the boiler 11 or a gas turbine, a chimney 11b, filling portions 18A and 18B, a mist eliminator 18C, and condensed water of vapor 32 are illustrated. The CO₂ recovery system may be provided afterward in order to recover CO₂ from an existing source of the exhaust gas 12, and may be simultaneously provided together with a new source of the exhaust gas 12. A door, which can be opened and closed, is installed on the chimney 11b and is closed when the CO₂ recovery system is operated. Further, the door is set to be opened when the source of the exhaust gas 12 is operating but the operation of the CO₂ recovery system is stopped.

In this embodiment, a lean solution temperature-reduction unit 50 for recovering the heat of the second lean solution 15 discharged from the absorbent regenerator 18 is provided. Accordingly, the heat of the lean solution 15 is effectively used.
That is, since the lean solution 15 is superheated by vapor 15a that is indirectly heated by the saturated vapor 25 in the absorbent regenerator 18, the lean solution 15 is discharged to the outside of the system while having a temperature of about 120°C. Then, the lean solution 15 is introduced into the rich/lean solution heat exchanger 23.
In this case, since the heat of the lean solution 15 is recovered by the lean solution temperature-reduction unit 50 so that the temperature of the lean solution 15 is lowered, it is possible to reduce the heat exchange capacity of the rich/lean solution heat exchanger 23.
If the temperature of the lean solution 15 to be subjected to heat exchange is high, that is, 120°C when the rich solution 17 is introduced into the rich/lean solution heat exchanger 23 while the temperature of the rich solution 17 is 50°C, the temperature of the rich solution 17 after heat exchange becomes 110°C. Accordingly, a difference in temperature becomes 60°C.
In contrast, when the temperature of the lean solution 15 is lowered, the temperature of the lean solution 15 introduced into the rich/lean solution heat exchanger 23 becomes 100°C or less and the temperature of the rich solution 17 after heat exchange becomes 95°C.
Accordingly, since the increase of the temperature of the rich solution 17 is reduced by 15°C, the heat exchange capacity of the rich/lean solution heat exchanger 23 is also reduced to that extent.

As a result, since the temperature of the rich solution 17 introduced into the absorbent regenerator 18 is lowered, it is possible to significantly reduce the amount of reboiler heat that is required to remove almost all of CO₂ from the rich solution 17.

Here, the amount of reboiler heat means heat capacity that is required to regenerate the absorbent in the absorbent regenerator 18.
The breakdown thereof corresponds to the sum Q_{R} of (a) the amount Q₁ of reaction heat that is required to regenerate the absorbent, (b) the amount Q₂ of heat loss of a solution that is discharged from the absorbent regenerator 18, and (c) the amount Q₃ of heat loss of vapor that is discharged together with CO₂ from the absorbent regenerator 18.
According to this embodiment, since the lean solution temperature-reduction unit 50, which recovers the heat of the lean solution 15, is provided, it is possible to reduce the sum of the amount of reboiler heat. As a result, since the amount of reboiler heat is reduced, it is possible to significantly reduce the amount of heat to be used in the absorbent regenerator 18.

### Second embodiment

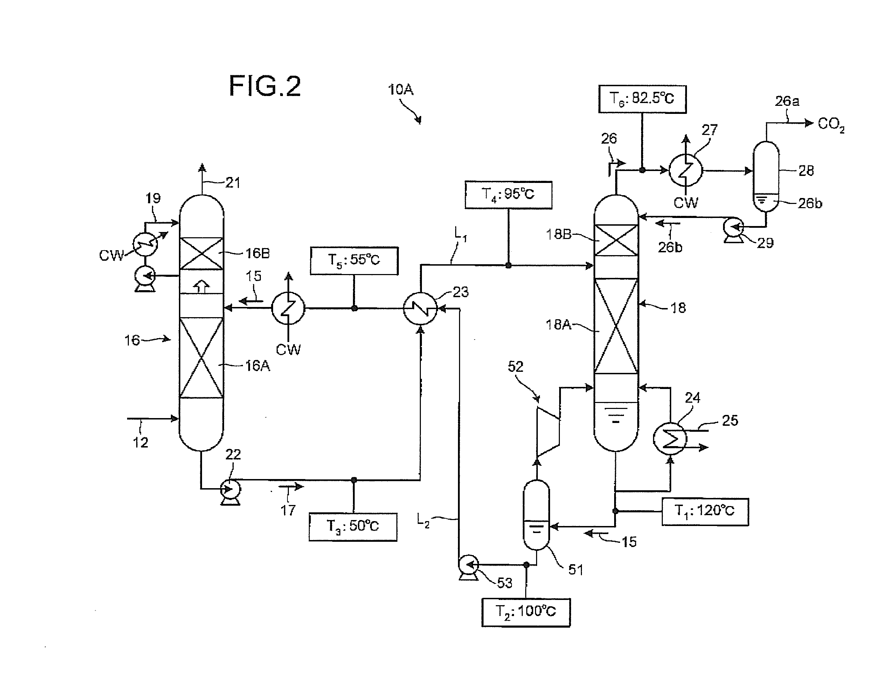

A CO₂ recovery system according to an embodiment of the invention will be described with reference to the drawing. FIG. 2 is a schematic view of a CO₂ recovery system according to a second embodiment.
As illustrated in FIG. 2, a lean solution temperature-reduction unit 50 of a CO₂ recovery system 10A includes a flash drum 51 that flashes a lean solution 15 and a flash vapor compressor 52 that supplies flashed vapor into the absorbent regenerator 18 with pressure.

A lean solution 15 is flashed in the flash drum 51, so that the temperature of the lean solution 15 becomes 100°C. Further, the temperature of the lean solution 15, which is introduced into a rich/lean solution heat exchanger 23 through a lean solution pump 53, becomes 100°C or less.

As described above, when the temperature T₁ of the lean solution 15 discharged from an absorbent regenerator 18 is, for example, 120°C, the lean solution 15 is flashed in the flash drum 51. Accordingly, the temperature T₂ of the lean solution 15, which has been flashed, becomes about 100°C.

For example, when the temperature T₃ of a rich solution 17 is 50°C, heat exchange is performed while the temperature T₂ of the lean solution 15 introduced into the rich/lean solution heat exchanger 23 is 100°C or less. Accordingly, the temperature T₄ of the rich solution 17 after heat exchange becomes 95°C. Further, the temperature T₅ of the lean solution 15 after heat exchange is lowered to 55°C. Meanwhile, the temperature T₆ of the solution, which is discharged as vapor to the outside, is 82.5°C.
Here, the pressure in the absorbent regenerator 18 is 0.9 kg/cm²G.

Accordingly, since the temperature of the rich solution 17, which is introduced into the absorbent regenerator 18, is lower than that in the past, it is possible to reduce the amount of reboiler heat at the absorbent regenerator 18.
Here, the breakdown of the amount of reboiler heat of the absorbent regenerator 18 corresponds to the sum (545 kcal/kgCO₂) of (a) the amount Q1 of reaction heat that is required to regenerate the rich solution 17 (404 kcal/kgCO₂), (b) the amount Q₂ of heat loss of a solution that is discharged from the absorbent regenerator 18 (55 kcal/kgCO₂), and (c) the amount Q₃ of heat loss of vapor that is discharged together with CO₂ from the absorbent regenerator 18 (86 kcal/kgCO₂).

In contrast, for example, if the temperature T₃ of a rich solution 17 is 50°C, when the heat of a lean solution 15 is not recovered as in the related art, heat exchange is performed while the temperature T₂ of the lean solution 15 introduced into a rich/lean solution heat exchanger 23 is 120°C. Accordingly, the temperature T₄ of the rich solution 17 after heat exchange becomes 110°C. Further, the temperature T₅ of the lean solution 15 after heat exchange is lowered to 60°C. Meanwhile, the temperature T₆ of the solution, which is discharged as vapor to the outside, is 92.5°C.
Accordingly, the breakdown of the amount of reboiler heat corresponds to the sum Q_{R} (665 kcal/kgCO₂) of (a) the amount Q₁ of reaction heat that is required to regenerate an absorbent (404 kcal/kgCO₂), (b) the amount Q₂ of heat loss of a solution that is discharged from the absorbent regenerator 18 (110 kcal/kgCO₂), and (c) the amount Q₃ of heat loss of vapor that is discharged together with CO₂ from the absorbent regenerator 18 (151 kcal/kgCO₂).

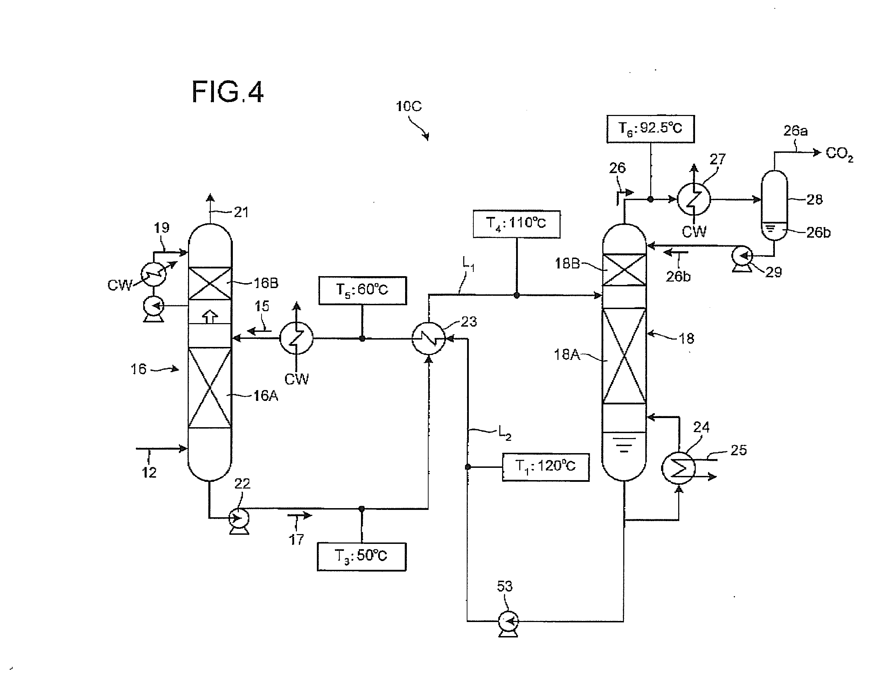

Since the amount of reboiler heat of the absorbent regenerator 18 of the CO₂ recovery system 10A according to the invention illustrated in FIG. 2 is 545 kcal/kgCO₂ and the amount of reboiler heat of the absorbent regenerator 18 of a CO₂ recovery system 10C in the related art illustrated in FIG. 4 is 665 kcal/kgCO₂, it has been found out that the amount of reboiler heat can be significantly reduced.

As described above, according to the invention, as illustrated in Table 1, it is possible to significantly reduce the sum of the amount of heat at the absorbent regenerator 18 and running cost is significantly reduced since the heat of the lean solution is effectively recovered.

**Table 1**

| | Heat exchange unit | Amount (Q₁) of reaction heat | Amount (Q₂) of heat loss | Amount (Q₃) of heat loss | Sum (Q_{R}) |
|---|---|---|---|---|---|
| Second embodiment | Flash drum | 404 | 55 | 86 | 545 |
| Third embodiment | Boiler-feedwater heat exchanger | 404 | 55 | 155 | 614 |
| Related art | None | 404 | 110 | 151 | 665 |

| | | | | | |
|---|---|---|---|---|---|
| (Unit kcal/kg·CO₂) | | | | | |

Meanwhile, a technique for reducing the amount of reboiler heat in the tower by raising the temperature of the rich solution 17 supplied into the absorbent regenerator 18 has been mainly examined in a proposal in the related art. However, in the invention, the amount of reboiler heat is reduced as a whole in consideration of not only the amount of heat in the tower but also (b) the amount Q₂ of heat loss of the solution (lean solution) that is discharged from the absorbent regenerator 18 and (c) the amount Q₃ of heat loss of vapor that is discharged together with CO₂ from the absorbent regenerator 18 (151 kcal/kgCO₂). Accordingly, it is possible to improve the energy efficiency of the entire system by recovering the heat of the lean solution 15.

### Third embodiment

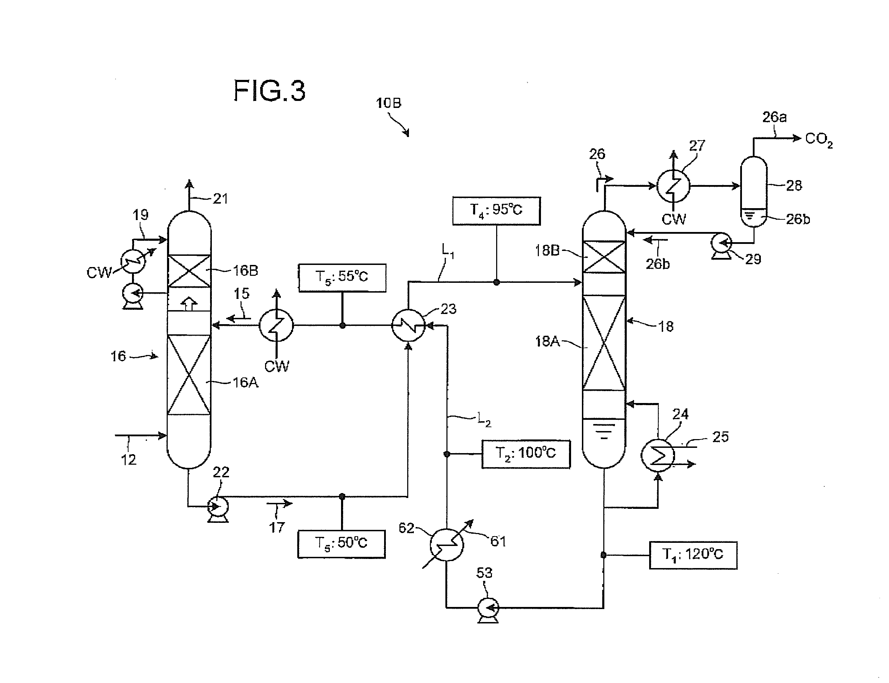

A CO₂ recovery system according to an embodiment of the invention will be described with reference to the drawing. FIG. 3 is a schematic view of a CO₂ recovery system according to a third embodiment.
As illustrated in FIG. 3, a lean solution temperature-reduction unit 50 of a CO₂ recovery system 10B is formed of a boiler-feedwater heat exchanger 62 that is used to heat boiler feedwater 61.
Since it is possible to make the temperature of a lean solution 15 become 100°C or less by the heat exchange with the boiler feedwater 61, the temperature of the lean solution 15 introduced into a rich/lean solution heat exchanger 23 becomes 100°C or less. Accordingly, the temperature of a rich solution 17 after heat change becomes 95°C.

The breakdown thereof corresponds to the sum Q_{R} (614 kcal/kgCO₂) of (a) the amount Q₁ of reaction heat that is required to regenerate an absorbent (404 kcal/kgCO₂), (b) the amount Q₂ of heat loss of a solution (lean solution) that is discharged from the absorbent regenerator 18 (55 kcal/kgCO₂), and (c) the amount Q₃ of heat loss of vapor 26 that is discharged from the absorbent regenerator 18 (155 kcal/kgCO₂).

Since the amount of reboiler heat of the absorbent regenerator 18 of the CO₂ recovery system 10B according to the invention illustrated in FIG. 3 is 614 kcal/kgCO₂ and the amount of reboiler heat of the absorbent regenerator 18 of the CO₂ recovery system 10C in the related art illustrated in FIG. 4 is 665 kcal/kgCO₂, it has been found out that the amount of reboiler heat can be significantly reduced.

From the above description, according to the CO₂ recovery system of the invention, it is possible to significantly reduce the heat energy of reboiler that is required to regenerate an absorbent when the size of the CO₂ recovery system is increased so that the amount of CO₂ to be recovered per day becomes, for example, 1000 t or more. Accordingly, it is possible to save energy of the entire system.

### Reference Signs List

- 10, 10A, 10B: CO₂ RECOVERY SYSTEM
- 11: BOILER
- 12: EXHAUST GAS
- 15: CO₂-ABSORBENT (LEAN SOLUTION)
- 16: CO₂ ABSORBER
- 17: RICH SOLUTION
- 18: ABSORBENT REGENERATOR
- 50: LEAN SOLUTION TEMPERATURE-REDUCTION UNIT
- 51: FLASH DRUM
- 52: FLASH VAPOR COMPRESSOR
- 61: BOILER FEEDWATER
- 62: BOILER-FEEDWATER HEAT EXCHANGER

## Claims

1. A CO₂ recovery system comprising:
a CO₂ absorber that brings a cooled CO₂-containing exhaust gas into contact with a CO₂-absorbent absorbing CO₂ to remove CO₂ from the exhaust gas;
an absorbent regenerator that regenerates an absorbent by releasing CO₂ from a CO₂-absorbent having absorbed CO₂; and
a lean solution temperature-reduction unit for recovering the heat of a lean solution that is discharged from the absorbent regenerator.

2. The CO₂ recovery system according to claim 1,
wherein the lean solution temperature-reduction unit includes a flash drum that flashes the lean solution, and a flash vapor compressor that supplies flashed vapor into the absorbent regenerator with pressure.

3. The CO₂ recovery system according to claim 1,
wherein the lean solution temperature-reduction unit is formed of a boiler-feedwater heat exchanger that is used to heat boiler feedwater.
